# EUROPEAN PATENT SPECIFICATION

(11) **EP 2 532 227 B1**
(45) Date of publication and mention of the grant of the patent: **21.08.2013**
(21) Application number: 12169541.5
(22) Date of filing: 25.05.2012
(51) Int. Cl.: A01K 1/015

(54) **Sealing system for placement under the floor of a stable on a manure receptacle**
Abdichtsystem für die Montage unter dem Boden eines Stalles über einen Güllekeller
Système d'étanchéité pour le placement sous le sol d'une étable au dessus d'un récipient de fumier

(30) Priority: 09.06.2011 NL 2006917
(43) Date of publication of application: 12.12.2012
(73) Proprietor: Lavalaye, Koen Harm Jozef, 7131 XS Lichtenvoorde (NL)
(72) Inventor: Lavalaye, Koen Harm Jozef, 7131 XS Lichtenvoorde (NL)
(74) Representative: Klavers, Cornelis

(56) References cited:
- EP-A1- 2 108 254
- DE-U1-202010 004 325
- FR-A1- 2 875 277
- US-A- 3 377 748

## Description

The present invention relates to a sealing system to be provided under the floor of an animal accommodation, comprising floor segments which are separated from one another by at least one slot which is present between side walls of said floor segments and via which manure drops into a cellar, wherein the upper side of a sealing which is obliquely suspended in the slot and which is made of an elastic material is secured in an opening of one of the two sidewalls and the bottom side thereof rests on a projecting edge of the opposite side wall.

The present invention further relates to a floor provided with such a sealing system.

The above-mentioned sealing system is known from DE-202010004325 U1. In said document, the upper side of the sealing is secured in the respective side wall by means of securing means. The problem raised concerning the accessibility of these securing means is solved, for example, by providing the floor segments with channels which extend in the direction of the securing means, which is achieved by providing nut-shaped recesses which extend from the upper side or by causing the supporting surface for the sealing to exhibit an upward inclination, which sealing is arranged in a triangular, recessed portion.

A drawback of these solutions is that they are different from both the constructional and the production-technical point of view and require considerable adaptations, giving rise to substantial increases in cost price.

It is an object of the present invention to provide a more universally applicable sealing system which is better accessible and in which the above problems have been solved or mitigated.

To achieve this the sealing system according to the invention is **characterized in that** the sealing is provided with a thickening formed in situ on the upper side thereof, which thickening is made of the same material and is a detachable tight fit in the opening constructed as a longitudinal opening.

An advantage of the sealing system according to the invention resides in that the thickening formed in-situ, which is made of the same elastic material as the sealing and hence simultaneously therewith, enables manual detachability without any tools being required. If necessary, the sealing which can be detachably provided can be replaced in a simple manner, and special measures in the respective floor segments are not required to tightly fit the thickening into the longitudinal opening or remove it from said opening. The desired degree of stench entrapment achieved at the location of the sealing thus formed, is better ensured by the tightly fit part in the form of a, as it were, continuous sealing. In addition, constituents of the faeces cannot be left in said sealing, as a result of which the sealing is not attacked, not even in the long run, since it cannot rust or become chipped, and it does not comprise rotating parts requiring maintenance either.

An embodiment of the sealing system is characterized according to the invention in that one of the two side walls has a recessed portion in which the longitudinal opening is provided, which may or may not be combined with the characterizing feature that the opposite side wall has a recessed further portion situated at the level of said recessed portion.

This has the advantage that some additional space can be created in situ, in different ways if required, so that via the slot the sealing can be manually removed and replaced in a simple manner.

Further, detailed, possible embodiments set forth in the other claims are mentioned together with the associated advantages in the following description.

The sealing according to the present invention will now be explained in greater detail with reference to the figures, in which corresponding parts are provided with the same reference numerals. In the drawings:
Figure 1 is a side view of an embodiment of the sealing with floor slabs according to the invention;
Figure 2 is a plan view of an embodiment of the floor slab of figure 1; and
Figure 3 shows a detail of the relief of the floor slab of figure 2.

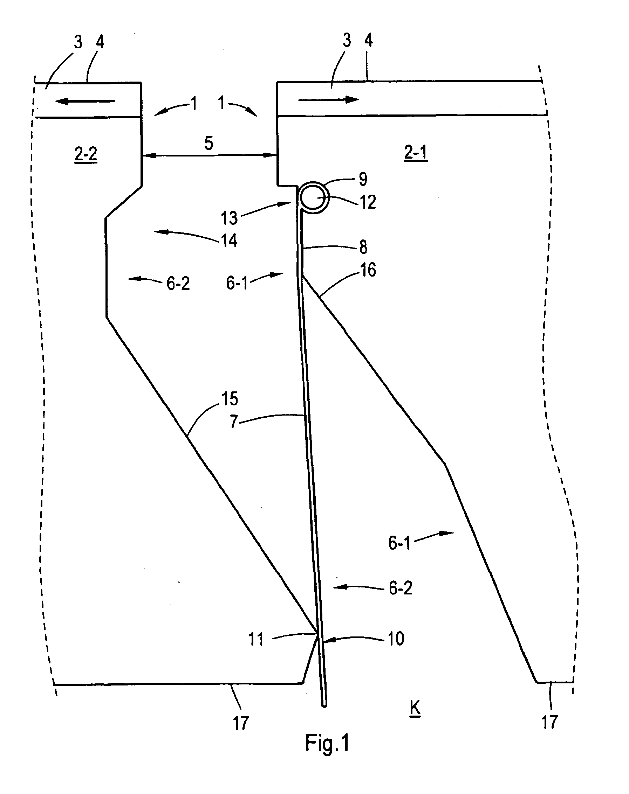

Figure 1 shows a sealing system 1 which is suitable for use in an animal accommodation or stable, in particular under the floor, especially on top of a cellar or manure receptacle K. The system 1 comprises floor segments extending usually in the longitudinal direction and generally bearing reference numeral 2, and on top of which a floor slab extends, which will be explained in greater detail hereinafter, whose upper surface 4 is flat in this case. By virtue thereof, people and animals walking on it are less likely to slip.

The floor segments 2-1, 2-2 are mutually separated by at least one slot 5 which is present between profiled side walls 6-1 and 6-2 of the neighboring floor segments. The solid fraction of the animal faeces or, in general, organic substance such as solid manure sweeped from the floor slab 3 passes through the slot 5 and falls into the underlying cellar K.

In the slot 5 there is provided a flexible valve or sealing 7 which prevents gasses, fumes and stench in the cellar K from passing to the exterior via the slot 5. To achieve this, the upper side 8 of the sealing 7 which is suspended obliquely in the slot 5 and which is made of elastic material is secured in an opening 9 of the side wall 6-1. The lower side 10 of the sealing 7 bears on a projecting edge 11 extending in the longitudinal direction and being situated on the opposite side wall 6-2.

The upper side 8 of the sealing 7 has a thickening 12 formed in situ of the same elastic material and also extending in the longitudinal direction, which thickening is a detachable tight fit in the corresponding opening 9. Like the longitudinal opening 9 extending substantially continuously in the longitudinal direction, the thickening 12 preferably is circular in cross-section. The continuous sealing 7 provides a continuous, hermetic seal on the upper side 8.

Fig. 1 further shows an embodiment comprising, in one side wall 6-1, a shoulder or recessed portion 13 in which the longitudinal opening 9 is provided. In this manner, space is created for the solid fraction of the animal faeces that has dropped to this level to drop further down, via the slot 5 and the sealing 7, into the cellar K without obstructions under all circumstances.

Preferably, the side wall 6-2 opposite the side wall 6-1 comprises a recessed further portion 14 at the level of the recessed portion 13. By virtue thereof, again a widening space is created for the solid fraction of the animal faeces dropping into the cellar K. Additionally, each of the above-mentioned two ways of creating space provides for better access to the elastically detachable sealing 7, enabling, in particular, the sealing to be manually detached in order to manually replace it by another sealing 7 to be tightly fitted into opening 9.

As is shown in fig. 1, the recessed further portion 14 forms a cavity in the form of a trapezium. The trapezium resting, as it were, on one side has a lower oblique side 15 which continues downwards and which recedes, thereby again creating space, with respect to an oblique side 16 on side wall 6-1. The projecting edge 11 is situated on the oblique side 15 of the trapezium, namely at a distance above the, in this case, flat lower side 17 of the respective floor segment 2 facing the cellar K.

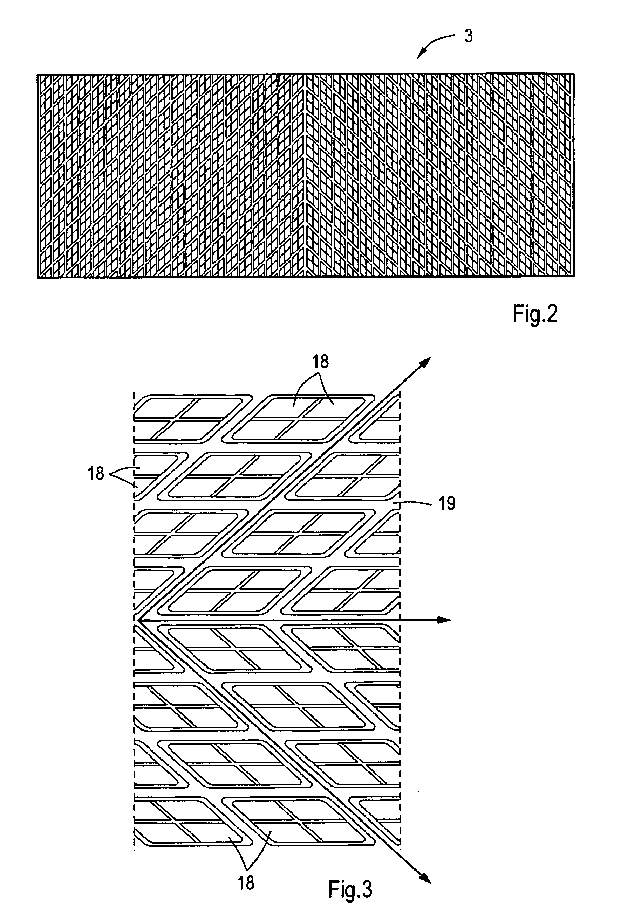

Fig. 2 shows the relief of the above-mentioned floor slab 3 having a flat walking surface which is formed by diamond-shaped, same-level, flat upper sides of dams 18.

Fig. 3 shows this relief in detail. The dams 18 are mutually separated by discharge channels 19 and 20, both for discharging liquid substances, in this case faeces, which channels, viewed from left to right in this drawing, slope towards the edges of the floor slab 3 in three directions of the arrows.

In fig. 1, the slope in neighboring floor slabs 3 which are mutually separated by the slot 5, is indicated by means of arrows pointing in opposite directions. There are wider, somewhat deeper channels 19 and narrower, somewhat shallower channels 20. In fig. 3, the flat upper surfaces of the dams 18 are intersected into groups of four by the channels 20, while neighboring groups of dams 18 arranged in this pattern are intersected by channels 19. Viewed from above, the dams 18 and the channels 19, 20 have a herringbone pattern. The flat upper or walking surface formed by the flat upper sides of the dams 18 provides a stable surface for both humans and animals, while the channels 19 enable the liquid fraction of the animal faeces to be carried away to a reservoir, which is not shown. The solid fraction of the animal faeces is regularly sweeped off the upper surface 4 and disappears into the cellar K via the narrow slot 5 and the elastic sealing 7, which is normally closed but which opens automatically under the pressure of the faeces. The width of the slot 5 is such, however, that the paws of the animals cannot pass there through, while the solid fraction can.

## Claims

1. A sealing system (1) to be provided under the floor of an animal accommodation, comprising floor segments (2; 2-1, 2-2) which are separated from one another by at least one slot (5) which is present between side walls (6-1, 6-2) of said floor segments (2; 2-1, 2-2) and via which manure drops into a cellar (K), wherein the upper side (8) of a sealing (7) which is obliquely suspended in the slot (5) and which is made of an elastic material is secured in an opening (9) of the one side wall (6-1) and the bottom side (10) thereof rests on a projecting edge (11) of the opposite side wall (6-2), **characterized in that** the sealing (7) is provided with a thickening (12) formed in situ on the upper side (8) thereof, which thickening (12) is made of the same material and is a detachable tight fit in the opening (9) constructed as a longitudinal opening (9).

2. The sealing system (1) according to claim 1, **characterized in that** the longitudinal opening (9) is circular in cross-section.

3. The sealing system (1) according to claim 1 or 2, **characterized in that** one of the two side walls (6-1, 6-2) has a recessed portion (13) in which the longitudinal opening (9) is provided.

4. The sealing system (1) according to claim 3, **characterized in that** the opposite side (6-2) wall has a recessed further portion (14) situated at the level of said recessed portion (13).

5. The sealing system (1) according to claim 4, **characterized in that** the recessed further portion has a cavity in the form of a trapezium (14).

6. The sealing system (1) according to claim 5, **characterized in that** the recessed portion (13) and the trapezium (14) each have receding, oblique sides (16; 15) extending as far as the cellar (K).

7. The sealing system (1) according to claim 6, **characterized in that** the projecting edge (11) is situated on the oblique side (15) of the trapezium (14).

8. The sealing system (1) according to any one of claims 1 to 7, **characterized in that** the projecting edge (11) is situated at a distance above the lower side (17) of the respective floor segment (2-2) facing the cellar (K).

9. The sealing system (1) according to claim 8, **characterized in that** between the projecting edge (11) and the above-mentioned lower side (17) there is an oblique side which recedes downwards with respect to the oblique side (16) of the opposite floor segment (2-1).

10. A floor (3) for an animal accommodation comprising a sealing system (1) according to any one of claims 1 to 9, the floor segments (2; 2-1, 2-2) of which are provided with a floor slab (3) having a walking surface (4) which is formed by diamond-shaped, flat, same-level upper sides of dams (18), which dams (18) are mutually separated by discharge channels (19, 20) for liquid faeces, which channels (19, 20) slope towards the edges of the floor slab (3).

11. The floor (3) according to claim 10, **characterized in that**, viewed from above, the dams (18) and the channels (19, 20) provide the flat walking surface (4) of the floor slab (3) with a herringbone pattern.

## Patentansprüche

1. Abdichtungssystem (1), welches unter dem Boden eines Tierstandplatzes vorgesehen werden soll, umfassend: Bodensegmente (2; 2-1, 2-2), welche voneinander durch wenigstens einen Spalt (5) getrennt sind, der zwischen Seitenwänden (6-1, 6-2) der Bodensegmente (2; 2-1, 2-2) vorhanden ist und über den Mist in einen Keller (K) fällt, wobei die obere Seite (8) einer Abdichtung (7), welche schräg im Spalt (5) aufgehängt ist und welche aus einem elastischen Material hergestellt ist, in einer Öffnung (9) der einen Seitenwand (6-1) befestigt ist und deren Bodenseite (10) auf einer vorspringenden Kante (11) der gegenüberliegenden Seitenwand (6-2) ruht, **dadurch gekennzeichnet, dass** die Abdichtung (7) mit einer Verdickung (12), welche auf ihrer oberen Seite (8) ausgebildet ist, vorgesehen ist, wobei die Verdickung (12) aus demselben Material hergestellt ist und einen abnehmbaren, engen Sitz in der Öffnung (9) ergibt, welche als eine Längsöffnung (9) gestaltet ist.

2. Abdichtungssystem (1) nach Anspruch 1, **dadurch gekennzeichnet, dass** die Längsöffnung (9) im Querschnitt kreisförmig ist.

3. Abdichtungssystem (1) nach Anspruch 1 oder 2, **dadurch gekennzeichnet, dass** eine der zwei Seitenwände (6-1, 6-2) einen vertieften Abschnitt (13) aufweist, in welchem die Längsöffnung (9) vorgesehen ist.

4. Abdichtungssystem (1) nach Anspruch 3, **dadurch gekennzeichnet, dass** die gegenüberliegende Seitenwand (6-2) einen vertieften weiteren Abschnitt (14) aufweist, welcher auf dem Niveau des vertieften Abschnitts (13) angeordnet ist.

5. Abdichtungssystem (1) nach Anspruch 4, **dadurch gekennzeichnet, dass** der vertiefte weitere Abschnitt eine Ausnehmung in der Form eines Trapezes (14) aufweist.

6. Abdichtungssystem (1) nach Anspruch 5, **dadurch gekennzeichnet, dass** der vertiefte Abschnitt (13) und das Trapez (14) jeweils zurücktretende, schräge Seiten (16; 15) aufweisen, welche sich bis zum Keller (K) erstrecken.

7. Abdichtungssystem (1) nach Anspruch 6, **dadurch gekennzeichnet, dass** die vorspringende Kante (11) an der schrägen Seite (15) des Trapezes (14) angeordnet ist.

8. Abdichtungssystem (1) nach jedem beliebigen der Ansprüche 1 bis 7, **dadurch gekennzeichnet, dass** die vorspringende Kante (11) in einem Abstand über der unteren Seite (17) des jeweiligen ersten Bodensegments (2-2), welche dem Keller (K) zugewandt ist, angeordnet ist.

9. Abdichtungssystem (1) nach Anspruch 8, **dadurch gekennzeichnet, dass** sich zwischen der vorspringenden Kante (11) und der oben erwähnten unteren Seite (17) eine schräge Seite befindet, welche nach unten in Bezug auf die schräge Seite (16) des gegenüber liegenden Bodensegments (2-1) zurücktritt.

10. Boden (3) für einen Tierstandplatz, umfassend ein Abdichtungssystem (1) nach einem beliebigen der Ansprüche 1 bis 9, dessen Bodensegmente (2; 2-1, 2-2) mit einer Bodenplatte (3) ausgestattet sind, welche eine Gehoberfläche (4) aufweist, die durch rautenförmige, flache obere Seiten von Dämmen (18) auf gleichem Niveau ausgebildet sind, wobei die Dämme (18) voneinander durch Abflusskanäle (19, 20) für flüssige Exkremente getrennt sind, wobei die Kanäle (19, 20) in Richtung der Kanten der Bodenplatte (3) abfallend ausgeführt sind.

11. Boden (3) nach Anspruch 10, **dadurch gekennzeichnet, dass**, betrachtet von oben, die Dämme (18) und die Kanäle (19, 20) eine ebene Gehoberfläche (4) der Bodenplatte (3) mit einem Fischgrätmuster bereitstellen.

## Revendications

1. Système d'étanchéité (1) à installer sous le plancher d'un local pour animaux, comprenant des segments de plancher (2 ; 2-1, 2-2) séparés les uns des autres par au moins une fente (5) présente entre des parois latérales (6-1, 6-2) desdits segments de plancher (2 ; 2-1, 2-2), par laquelle des fumier tombe dans un sous-sol (K), dans lequel le côté supérieur (8) d'un joint d'étanchéité (7) suspendu de façon oblique dans la fente (5) et constitué d'un matériau élastique est fixé dans une ouverture (9) de l'une des parois latérales (6-1), tandis que le côté inférieur (10) de celui-ci repose sur un bord saillant (11) de la paroi latérale opposée (6-2), **caractérisé en ce que** le joint d'étanchéité (7) est pourvu d'un épaississement (12) formé in situ sur le côté supérieur (8) de celui-ci, lequel épaississement (12) est constitué du même matériau et forme un ajustement serré détachable dans l'ouverture (9) construite comme une ouverture longitudinale (9).

2. Système d'étanchéité (1) selon la revendication 1, **caractérisé en ce que** l'ouverture longitudinale (9) présente une section transversale circulaire.

3. Système d'étanchéité (1) selon la revendication 1 ou 2, **caractérisé en ce que** l'une des deux parois latérales (6-1, 6-2) possède une partie renfoncée (13) dans laquelle est prévue l'ouverture longitudinale (9).

4. Système d'étanchéité (1) selon la revendication 3, **caractérisé en ce que** la paroi latérale opposée (6-2) possède une autre partie renfoncée (14) située au niveau de ladite partie renfoncée (13).

5. Système d'étanchéité (1) selon la revendication 4, **caractérisé en ce que** l'autre partie renfoncée possède une cavité en forme de trapèze (14).

6. Système d'étanchéité (1) selon la revendication 5, **caractérisé en ce que** la partie renfoncée (13) et le trapèze (14) possèdent chacun des côtés obliques (16 ; 15) s'étendant vers l'arrière jusqu'au sous-sol (K).

7. Système d'étanchéité (1) selon la revendication 6, **caractérisé en ce que** le bord saillant (11) se trouve sur le côté oblique (15) du trapèze (14).

8. Système d'étanchéité (1) selon l'une quelconque des revendications 1 à 7, **caractérisé en ce que** le bord saillant (11) se trouve à une distance au-dessus du côté inférieur (17) du segment de plancher respectif (2-2) en face du sous-sol (K).

9. Système d'étanchéité (1) selon la revendication 8, **caractérisé en ce qu'**entre le bord saillant (11) et le côté inférieur (17) mentionné ci-dessus, il est prévu un côté oblique s'étendant vers l'arrière et vers le bas par rapport au côté oblique (16) du segment de plancher opposé (2-1).

10. Plancher (3) pour un local pour animaux, comprenant un système d'étanchéité (1) selon l'une quelconque des revendications 1 à 9, dont les segments de plancher (2 ; 2-1, 2-2) sont pourvus d'un parquet (3) présentant une surface de marche (4) formée par les côtés supérieurs plats, de même niveau et en forme de diamant, de barrages (18), lesquels barrages (18) sont séparés les uns des autres par des canaux d'évacuation (19, 20) pour des selles liquides, lesquels canaux (19, 20) sont inclinés vers les bords du parquet (3).

11. Plancher (3) selon la revendication 10, **caractérisé en ce que**, vus d'au-dessus, les barrages (18) et les canaux (19, 20) fournissent la surface de marche plane (4) du parquet (3) avec un motif en chevrons.
